# EUROPÄISCHE PATENTSCHRIFT

(11) **EP 3 631 309 B1**
(45) Veröffentlichungstag und Bekanntmachung des Hinweises auf die Patenterteilung: **13.09.2023**
(21) Anmeldenummer: 18732655.8
(22) Anmeldetag: 30.05.2018
(51) Int. Cl.: F24F 3/16, F24F 6/06

(54) **LUFTWÄSCHER**
AIR SCRUBBER
LAVEUR D'AIR

(30) Priorität: 01.06.2017 CH 7092017
(43) Veröffentlichungstag der Anmeldung: 08.04.2020
(73) Patentinhaber: Boneco AG, 9443 Widnau (CH)
(72) Erfinder: FITSCH, Manfred, 6700 Bludenz (AT)
(74) Vertreter: Laminger, Norbert
(86) Internationale Anmeldenummer: PCT/EP2018/000282
(87) Internationale Veröffentlichungsnummer: WO 2018/219499

(56) Entgegenhaltungen:
- WO-A1-2008/142866
- US-A- 3 149 626
- US-A- 3 621 830
- US-A- 3 895 083
- US-A- 5 795 505
- US-A1- 2011 084 414

## Beschreibung

Die Erfindung betrifft einen Luftwäscher gemäss dem Oberbegriff des Patentanspruchs 1.

Verunreinigungen in der Luft wie Staub, Pollen, Bakterien etc. stellen für manche Menschen eine Belastung dar. Aus diesem Grund gibt es als "Luftwäscher" bekannte Geräte. In diesen wird ein Luftstrom in Kontakt mit Wasser - das unter Umständen mit Wirk- und/oder Aromastoffen versetzt sein kann - in Kontakt gebracht. Das hat zur Folge, dass erstens insbesondere als Feststoffpartikel vorhandene Verunreinigungen im Wasser zurückbleiben und zweitens die Luft befeuchtet wird, was sich ebenfalls positiv auf das Raumklima auswirkt.

Für Luftwäscher ist das Prinzip bekannt, einen Luftstrom durch ein befeuchtetes Gebilde, insbesondere aus einem saugfähigen, ins Wasser eingetauchten Material, zu führen. Dabei kann die Luft Verunreinigungen abgeben und - je nach bereits vorhandener Luftfeuchtigkeit-Feuchtigkeit aufnehmen. In solchen Luftwäschern ist aus Effizienzgründen wichtig, dass der Luftstrom einerseits mit einer möglichst grossen Oberfläche des Gebildes in Berührung kommt und andererseits ein grosses Luftvolumen gefördert werden kann, wofür ein möglichst kleiner Strömungswiderstand günstig ist. Weiter ist in der Praxis wichtig, dass das Luftwäscher-Gerät als Ganzes möglichst kompakt ist und wenig Platz einnimmt, was der Forderung nach möglichst grosser Oberfläche des Gebildes entgegensteht.

Aus der WO 2015/179993 ist ein Luftwäscher mit einem Radialventilator bekannt, welcher die Luft axial ansaugt und radial nach aussen ausbläst. Eine elektrisch angetrieben um eine Trommelachse drehbare Trommel mit einem in einem offenporigen Gebilde und einem dieses aussenseitig umgreifenden käfigartigen Trommelgehäuse ist den Radialventilator umgebend so angeordnet ist, dass die radial nach aussen ausgeblasene Luft durch das Gebilde geblasen wird.

In der US 3149626 A ist ein Luftwäscher offenbart, mit einem Gehäuse, einem elektrisch angetriebenen Ventilator, einer Wasserwanne und einer im Wesentlichen horizontal liegenden Trommel mit einem offenporigen bzw. saugfähigen Gebilde. Die Trommel ist elektrisch ange trieben um eine Drehachse drehbar ist, wobei der jeweils unterste Abschnitt der Trommel unterhalb einer Mindestfüllstandshöhe der Wasserwanne liegt. Die Trommel bildet eine zylindrische Auflage für ein benetzbares geschlossenes umlaufendes Band, welches die Auflage an deren Aussenseite umspannt. Die durch den Ventilator geförderte Luft durchströmt zumindest den oberhalb der Wasserwanne gelegenen oberen Abschnitt der Trommel und des umspannenden Bandes.

Für einen Luftbefeuchter für belüftete Öfen ist in der US 5795505 A offenbart, dass der Luftstrom eines Gebläses radial von innen nach aussen durch einen Stapel von benetzbaren Scheiben geführt wird. Dieser Stapel liegt um eine horizontale Achse drehbar oberhalb einer Wasserwanne, so dass ein Abschnitt der Scheiben im Wasser eingetaucht ist.

Eine gleichartige Luftführung ist gemäss der US 3895083 A vorgesehen, bei der ein befeuchteter hohlzylindrischer Körper auf zwei einander gegenüberliegenden Aufnahmen aufgespannt ist. Jede dieser Aufnahmen besteht aus einem Kranz von sich axial parallel zur Drehachse der Aufnahme erstreckenden Stiften. Beide Aufnahmen sind auf einer gemeinsamen Drehachse angeordnet, die zur Rotation der Aufnahmen angetrieben und horizontal liegend angeordnet ist, um einen Abschnitt des hohlzylindrischen Körpers in das in einer unteren Wasserwanne aufgenommene Wasser zu tauchen.

Einen kombinieren Luftwäscher und Luftbefeuchter beschreibt die WO 20008/142866 A1. Er besteht aus einem Verdampfungsfilter, einer Wasserversorgung und einem Gebläse. Gemäss einer der offenbarten Ausführungsformen ist der Verdampfungsfilter in hohlzylindrischer Form um eine horizontale Drehachse motorisch angetrieben gelagert und wird vom Luftstrom des Gebläses radial durchströmt. Ein Abschnitt des Verdampfungsfilters taucht in eine Wasserwanne ein.

Die US 3621830 A offenbart einen Luftwäscher mit einem Gehäuse, in welchem eine horizontal liegende Trommel mit einer Matte aus saugfähigem Material um eine Drehachse drehbar ist, wobei der jeweils unterste Abschnitt der Trommel in Wasser eintaucht, das in einer Wasserwanne aufgenommen ist. Die Trommel besteht aus mehreren achsparallelen Auflageelementen, die zwischen zwei Endplatten verlaufen, wobei diese drei Elemente separat ausgeführt und vor Inbetriebnahme des Gerätes zusammengebaut werden. Die Auflageelemente verlaufen durchgehend von der ersten Endplatte bis zur zweiten Endplatte, wobei beide Endplatten die Matte axial beidseitig begrenzen.

Bei Luftwäschern besteht - wie bei anderen Geräten für die Raumklimatisierung auch - das Bedürfnis, dass diese möglichst hygienisch und keimfrei bzw. keimarm gehalten werden können. Zu diesem Zweck ist bspw. bekannt, ein Silberionen abgebendes Element in einem vom Wasser bedeckten Teil zu platzieren. Auch wenn das durchaus wirksam ist, erfüllt dieses Vorgehen jedoch nicht alle Anforderungen an die Hygiene. Eine einfache Reinigbarkeit des saugfähigen Gebildes und der anderen mit Wasser in Berührung kommenden Teile wäre wünschenswert.

Es ist Aufgabe der vorliegenden Erfindung einen Luftwäscher zu schaffen, welcher die Nachteile des Standes der Technik überwindet, eine potentiell kompakte Bauweise mit grosser Effizienz kombiniert und insbesondere einfach reinigbar und herstellbar ist.

Gemäss einem Aspekt der Erfindung wird ein Luftwäscher zur Verfügung gestellt, der auf einem Aufbau mit einem elektrisch angetriebenen Ventilator in einem Gehäuse beruht, in welchem auch eine Wasserwanne und eine Einrichtung angeordnet sind, welche zur Befeuchtung mit Wasser aus der Wasserwanne ausgebildet ist, wobei die Einrichtung eine im Wesentlichen horizontal liegende Trommel mit einem offenporigen bzw. saugfähigen Gebilde aufweist, welche elektrisch angetrieben um eine Drehachse drehbar ist, wobei der jeweils unterste Abschnitt der Trommel unterhalb einer definierten Mindestfüllstandshöhe der Wasserwanne gelegen ist.

Zur Lösung dieser Aufgabe sind die Merkmale des unabhängigen Anspruchs 1 vorgesehen, wobei weitere erfindungsgemässe Merkmale aus den abhängigen Ansprüchen, der Beschreibung und den beigefügten Zeichnungen hervorgehen.

An der Trommel ist erfindungsgemäss eine vorzugsweise um die Drehachse zylindrische Auflage ausgebildet. Die Drehachse ist dabei gleichzeitig die Achse, um welche die Trommel radialsymmetrisch bzw. drehsymmetrisch aufgebaut ist. Weiters ist das offenporige bzw. saugfähige Gebilde als eine ein geschlossenes umlaufendes Band bildende benetzbare Matte ausgebildet, welche Matte die Auflage an deren Aussenseite umspannt und durch Abziehen in axialer Richtung von der Trommel entfernbar und durch eine Bewegung in axialer Richtung auf die Trommel aufschiebbar ist. Die zur Benetzung vorgesehene Matte bildet den die Feuchtigkeit aufnehmenden Teil der Einrichtung.

Die Drehachse der Trommel ist mindestens ungefähr horizontal angeordnet, d.h. die Drehachse ist mindestens ungefähr parallel zur Wasseroberfläche (verläuft bspw. in einem Winkel von 10° maximal 20° zur Horizontalen). Die Drehachse des Ventilators kann hingegen winkelig zu jener der Trommel bevorzugt vertikal orientiert sein, d.h. die Luft wird von aussen her angesogen und bevorzugt vertikal nach unten in die Trommel geblasen - oder allenfalls umgekehrt durch die Trommel angesaugt und winkelig zur Drehachse der Trommel z.B. vertikal nach oben ausgeblasen.

Die Luftführung für die durch den Ventilator geförderte Luft verläuft dabei durch zumindest einen oberhalb der Wasserwanne gelegenen oberen Abschnitt der Matte und der mit der Matte umspannten Trommel. Dazu ist das Gehäuse als entsprechend geformter Luftführungskanal ausgebildet oder es ist im Gehäuse ein derartiger Kanal angeordnet, der die Luft von zumindest einem Lufteinlass am Gehäuse - durch die Saug- und/oder Druckwirkung des Ventilators - zur Trommel, durch die Matte und schlussendlich wieder durch zumindest einen Luftauslass am Gehäuse in die Umgebung leitet. Durch den Ventilator geförderte Luft ist durch einen oberen Teil der mit der Matte umspannten Trommel führbar, um diese Luft zu reinigen und zu befeuchten.

Die Matte ist offenporig in dem Sinn, dass Wasser in ein Inneres der Matte eindringen kann und sich im Innern der Matte an Oberflächen z.B. an den Wänden wie von Hohlräumen, Zellen, Zellwänden, Fasern oder Fäden anlagern kann, d.h. die effektive für das Wasser zur Benetzung zur Verfügung stehende Oberfläche ist grösser als eine blosse aussenseitige Oberfläche. In vorteilhafter Weise kann die Matte zusätzlich aus einem mehr oder wenig stark hydrophilen Material oder einer auf das Material z.B. durch aufsprühen oder tauchen aufgebrachten Beschichtung mit hydrophilen Eigenschaften bestehen um die Aufnahmefähigkeit für Flüssigkeiten noch zusätzlich zu erhöhen. Insbesondere kann die Matte ein schaumartiges und/oder textiles Gebilde sein. Sie kann insbesondere eine innere (auflageseitige) textile Schicht und eine äussere textile Schicht aufweisen, wobei zwischen den textilen Schichten eine Vielzahl von Fäden verlaufen, welche jeweils die innere und die äussere textile Schicht miteinander verbinden, so dass sich zwischen den textilen Schichten ein von den Fäden durchquerter Zwischenraum ergibt. Die Fäden können in dem Sinn mehr oder weniger parallel verlaufen, dass sie sich mehrheitlich gegenseitig nicht berühren. Die Fäden können eine gewisse Eigensteifigkeit aufweisen, so dass sie den Abstand der inneren und äusseren Schicht zueinander bewahren, wobei aber die Matte als Ganze entgegen einer elastischen Kraft bzw. Rückstellkraft der Fäden komprimierbar ist.

Aufgrund der erfindungsgemässen Konstruktion kann die Matte insbesondere aus einem Material sein, welches nicht eine genügende Eigensteifigkeit hat, um auch ohne die Auflage eine sich selbst tragende kreiszylindrische Form zu bilden.

Eine solche Matte kann aus einem Kunststoffmaterial gefertigt sein. Es hat sich beispielsweise gezeigt, dass sich Polyethylenterephthalat (PET) als Material für die Matte sehr gut eignet, trotz seiner hydrophoben Eigenschaften. Bei Verwendung eines eher hydrophoben Materials wie PET zeigt sich insbesondere, dass nach mehrmaligem Gebrauch des Geräts die Effizienz noch zunimmt, da für das Auge nicht oder kaum sichtbare Ablagerungen auf den Oberflächen der Fäden (oder anderen Elemente der Matte) die Wasseraufnahmefähigkeit der Matte als Ganzes erhöhen. Für die Veränderung der Feuchtigkeits- bzw. Flüssigkeitsaufnahme der Matte können beispielsweise auch hier Beschichtungen mit unterschiedlichen Eigenschaften wie bereits vorstehend erwähnt auf diese aufgebracht werden.

Die Matte ist, wie oben bereits erläutert ist, durch Abziehen in axialer Richtung (als geschlossenes Band) von der Trommel entfernbar. Ausserdem ist die Auflage so ausgebildet, dass die Matte durch eine (bspw. entgegengesetzte) Bewegung in axialer Richtung wieder aufschiebbar ist. Bevorzugt ist dazu vorgesehen, dass die Auflage durch ein korbartiges Gitter oder Geflecht mit Durchbrüchen oder eine Anordnung von axial verlaufenden Stegen gebildet ist. Dies ergibt eine bspw. zylindrische Auflagefläche - eventuell mit Perforierungen - welches mit axial verlaufenden Rippen oder dergleichen versehen oder von diesen gebildet ist. Auf jeden Fall ist das umlaufende Band durch eine einfache Schiebebewegung in axialer Richtung aufschiebbar, und zwar auch dann, wenn das Band ein wenig elastisch ist, mit einem im entspannten Zustand im Vergleich zum Durchmesser der Auflage leicht kleineren Durchmesser.

Zwischen Matte und Auflage sind daher vorzugsweise keinerlei Verbindungselemente vorgesehen, welche die Matte auf der Auflage fixieren, sei es in Bezug auf axiale als auch umfangsmässige Relativbewegungen dieser Elemente. Das schliesst insbesondere aus, dass die Auflage durch nebeneinander angeordnete kreisscheibenförmige Platten (ohne periphere axial verlaufende Strukturen dazwischen) oder durch in einem axialen Abstand zueinander angeordneten umlaufende Ringe gebildet wird, denn auf eine solche Anordnung ist ein Band nicht durch eine einfache Schiebebewegung aufschiebbar. Die Auflage ist durch ein oder mehrere Auflageelemente gebildet, welche in axialer Richtung im Wesentlichen durchgehend sind, jedoch beispielsweise in axialer und/oder Umfangsrichtung um geringe Distanzen voneinander distanziert oder mit Durchbrüchen versehen sein können.

Optional kann die Auflage zu mindestens einer Seite hin verjüngt sein, d.h. der Durchmesser bzw. der Umfang der Auflage nimmt zu mindestens einer Seite hin vorzugsweise kontinuierlich ab, so dass beim Aufschieben das umlaufende Band über eine rampenartige Partie aufgezogen wird, was das Aufziehen vereinfacht.

Die Trommel weist zusätzlich zur Auflage beidseitig je eine Endplatte auf, eine erste Endplatte und eine zweite Endplatte. Da beidseitig je eine Endplatte vorhanden ist, ist mindestens eine der beiden Endplatten reversibel von einem Trommelkörper entfernbar, welcher die Auflage bildet und welcherauch die andere Endplatte aufweist. Diese Endplatten weisen einen im Vergleich zum Durchmesser der Auflage grösseren Durchmesser auf und bilden einen Anschlag für die Matte zu den Seiten (in axialer Richtung) hin. Der Durchmesser der Endplatten entspricht bspw. mindestens ungefähr dem Aussendurchmesser der Matte, wenn diese auf die Auflage aufgeschoben ist. Das kann bevorzugt mittels eines Bajonettverschlusses gelöst sein, über welchen die Endplatten mit dem Trommelkörper lösbar verbunden sind.

Die Trommel und generell die Einrichtung kann frei von sich aussenseitig an der Matte befindenden Elementen, insbesondere von die Matte aussenseitig übergreifenden, mit der Trommel mitdrehenden Elementen sein. Die Matte bildet also radial-aussenseitig mindestens in einem axialen Bereich die äussere Oberfläche der sich drehenden Einrichtung (das schliesst nicht aus, dass die Endplatten optional einen grösseren Durchmesser haben können als die Matte), und zwar entlang des ganzen Umfangs, sie kann also insbesondere von innen geführt sein. Die Matte kann so dimensioniert sein, dass sie gegebenenfalls zwischen den beiden Endplatten in axialer Richtung leicht komprimiert wird, d.h. dass sie durch die beiden Endplatten entgegen einer elastischen Rückstellkraft leicht zusammengepresst wird.

Gemäss einer bevorzugten Ausführungsform der Erfindung des Luftwäschers sind die Trommel und der Ventilator relativ zueinander derart angeordnet und/oder ausgerichtet und/oder ist die Luft im Gehäuse derart geführt, dass die Luft zuerst durch die Matte hindurch radial ins Trommelinnere und von dort erneut durch die Matte hindurch radial wieder nach aussen strömt. Dazu sind gegebenenfalls Luftführungsmittel vorhanden, um diese Strömungsführung zu bewirken. Im Gegensatz zu Ausführungen mit in Bezug zur Trommel axialem Luftstrom wird also die Matte zweimal durchströmt, was die Effektivität erhöht.

Eine weitere erfindungsgemässe Ausführungsform ist dadurch gekennzeichnet, dass das Gehäuse insbesondere zweiteilig in dem Sinn ist, dass es ein Gehäuseunterteil, in welchem die Wanne ausgebildet oder angeordnet ist, und welches frei von elektronischen Bauteilen ist, und ein vom Gehäuseunterteil abhebbares Gehäuseoberteil aufweist, wobei das Gehäuseoberteil den Ventilator trägt. Das Gehäuseoberteil ist also abnehmbar auf das Gehäuseunterteil aufgesetzt. Es kann bspw. abhebbar sein, ohne dass eine Verbindung gelöst werden muss, oder ein Abheben des Gehäuseoberteils kann das Lösen einer Verbindung voraussetzen, bspw. durch Drehen eines Verriegelungsknopfs, Betätigen eines Schnappverschlusses oder dergleichen. Das Gehäuseoberteil selbst kann ebenfalls in einfachster Weise aufgebaut sein, bspw. aus zwei Gehäuse-Teilschalen zusammengesetzt sein. Das Gehäuseunterteil kann sogar einteilig sein.

Der Luftwäscher kann in Ausführungen mit Gehäuseoberteil und Gehäuseunterteil insbesondere so konzipiert sein, dass das Gehäuseoberteil alle elektronischen Bauteile trägt, d.h. sämtliche Halbleiterbauteile und ggf. Kondensatoren (für Steuerung, Stromwandlung etc.) und auch alle Wandler, insbesondere alle Motoren. Das Gehäuseunterteil ist dann frei von elektronischen Bauteilen. Auch der Ventilator kann vorteilhafterweise im Gehäuseoberteil vorhanden sein. Die Elektronik kann auch ein Funk- oder Bluetooth-Modul enthalten, über das ein Datenaustausch mit einem externen Steuergerät bzw. die Steuerung der Funktionen des Luftwäschers über dieses Steuergerät erfolgen kann. Vorzugsweise ist eine Verbindung eines Smartphones als Steuergerät über eine geeignete darauf installierte Applikation vorgesehen.

Weiters kann ein Wassertank zur Verfügung stehen, von welchem aus bedarfsgerecht Wasser in die Wasserwanne nachfliesst, sobald der Wasserstand darin einen gewissen Sollwert unterschritten hat. Die Regelung des Wasserstands kann durch einen aktiven Regler mit Wasserstandssensor oder passiv, bspw. nach dem sogenannten "Vogeltränkeprinzip" erfolgen. Dabei kann optional eine Massnahme zur Unterdrückung unerwünschter Geräusche getroffen sein.

Eine weitere Ausführungsform eines erfindungsgemässen Luftwäschers ist daher dadurch gekennzeichnet, dass das Gehäuseunterteil eine grössere Länge und/oder Breite aufweist als das Gehäuseoberteil, wobei sich die Wasserwanne bis in den nicht vom Gehäuseoberteil abgedeckten Bereich des Gehäuseunterteils erstreckt und als Träger eines abnehmbaren, vorzugsweise seitlich am Gehäuse positionierten Wassertanks ausgebildet ist. Damit können die Nachfüllintervalle bedeutend verlängert werden. Darüber hinaus ist es nicht notwendig, für das Nachfüllen den Luftwäscher zu deaktivieren und auch das Abnehmen des Gehäuseoberteils kann entfallen, weil nur der Wassertank zum Befüllen entfernt werden muss. Während der Füllzeit kann der Luftwäscher mit dem noch in der Wasserwanne befindlichen Vorrat an Flüssigkeit weiter betrieben werden.

Bevorzugt sind dabei an einer im auf das Gehäuseunterteil aufgesetzten Stellung des Wassertanks im Volumen der Wasserwanne liegenden Position eine abschliessbare Befüllungsöffnung und/oder ein Ventil angeordnet. Das Ventil erlaubt ein Nachfliessen von Wasser aus dem Wassertank in die Wasserwanne nur bei Unterschreiten einer Mindestfüllstandshöhe in der Wasserwanne und verhindert ein Ausfliessen des Wassers bei Abheben des Wassertanks vom Gehäuseunterteil. Vorzugsweise sind beide Funktionen in einem Bauteil vereint, insbesondere in einem Schraubverschluss für den Tank, der ein entsprechendes Ventil beinhaltet.

Vorzugsweise ist bei allen bislang beschriebenen Ausführungsformen zumindest ein Füllstandssensor für das Wasser in der Wanne vorhanden. Dazu kann ein Füllstandssensor nur im Gehäuseoberteil angeordnet und mit berührungslos arbeitenden Abfrageorganen ausgestattet sein oder es weist das Gehäuseunterteil vorzugsweise elektrische Kontakte auf, welche mit einer im Gehäuseoberteil angeordneten Auswerteelektronik für eine Leitfähigkeitsmessung verbunden sind. Die mindestens zwei Leiter erstrecken sich dann einander nicht berührend von dort, wo sie Kontakte zum Gehäuseoberteil hin bilden, in der Wanne nach unten bis auf eine Mindestfüllstandshöhe. Wenn die im Gehäuseoberteil angeordnete Auswerteelektronik eine substantielle Leitfähigkeit zwischen den beiden Leitern misst, ist die Wasserwanne mindestens bis zur Mindestfüllstandshöhe befüllt, ansonsten nicht. Der Luftwäscher kann so programmiert sein, dass er sich ausschaltet und/oder ein Signal abgibt, wenn die Mindestfüllstandshöhe nicht erreicht ist oder das Gehäuseoberteil nicht auf das Gehäuseunterteil aufgesetzt ist.

Diese Lösung mit vom Gehäuseoberteil her kontaktierbaren Leitern hat den weiteren Vorteil, dass die einfache Reinigbarkeit aller im Gehäuseunterteil vorhandenen Elemente unterstützt wird, erfolgt doch die Füllstandsüberwachung ohne bewegliche Teile (Schwimmer oder dergleichen), welche das Zusammensetzen verkomplizieren oder das Reinigen der Wanne als Ganzes erschweren.

Das Gehäuseunterteil kann so ausgebildet sein, dass sich die Wanne nach allen Seiten hin eine mindestens gleich grosse Ausdehnung hat wie das Gehäuseoberteil, dass also mit der möglichen Ausnahme eines abnehmbaren Wassertanks kein anderes Bauelement seitlich neben/vor/hinter der Wasserwanne angeordnet ist.

Das Vorgehen gemäss der Erfindung ermöglicht insbesondere eine einfache Reinigung der während des Gebrauchs mit dem Wasser in Berührung stehenden Teile. So kann die Matte insgesamt aus flexiblem Material bestehen. Nach ihrer - aufgrund der erfindungsgemässen Konstruktion sehr einfachen, benutzerfreundlichen - Entfernung von der Trommel kann sie mechanisch bearbeitet (gewalkt) werden, wodurch sich angelagerter Kalk in einfachster Weise löst, da Kalkablagerungen nicht elastisch sind. Insbesondere kann die Matte waschmaschinenfest ausgebildet sein. Während eines Waschgangs lösen sich durch die mechanische Einwirkung die Kalkablagerungen, und andere Verschmutzungen werden abgewaschen.

Aufgrund des erfindungsgemässen Vorgehens ist die Einrichtung verschieden von einer Verdunstermatte (Saugmatte), indem sie zwangsbewässert ist. Die Zwangsbewässerung erfolgt im vorliegenden Fall durch die Drehbewegung der Trommel um ihre Achse bei gleichzeitigem Eintauchen der Unterseite der Trommel in die gefüllte Wasserwanne.

Der Aufbau mit einer bspw. textilen oder eventuell schaumartigen, um eine drehbare Trommel herum gespannten und von Luft durchströmten Matte hat ausserdem grosse Vorteile im Vergleich zu aus dem Stand der Technik bekannten, ebenfalls eine Trommel bildenden Stapeln aus benetzbaren Scheiben. Bei solchen wird konstruktionsgemäss ein innerer Teil der Scheiben nicht benetzt, was insbesondere ins Gewicht fällt, wenn die Wasserwanne fast leer ist. Entsprechend strömt ein Teil der Luft an nicht benetzten Teilen vorbei und wird nicht wirksam gewaschen und befeuchtet.

Im Gegensatz dazu ist beim erfindungsgemässen Vorgehen immer sichergestellt, dass die ganze Matte, also die ganze aktive Fläche benetzt wird, solange das Wasser in der Wanne den Minimalfüllstand erreicht. Indem die Matte durchströmt wird, wird immer alle Luft mit benetzten Oberflächen in Kontakt kommen.

Auch für die Herstellung hat das erfindungsgemässe Vorgehen Vorteile: im Vergleich zu Scheibenstapeln gemäss dem Stand der Technik sind viel weniger Einzelteile erforderlich.

Ausserdem können weitere Teile, insbesondere die Trommel, aber optional auch das die Wanne bildende Gehäuseunterteil als Ganzes oder - gegebenenfalls - die Wanne, als solche spülmaschinenfest ausgebildet sein.

Insbesondere können die Trommel und optional das die Wanne bildende Gehäuseunterteil bis mindestens 55°C spülmaschinenfest und/oder die Matte bis 40° waschmaschinenfest sein. Die Eigenschaften "spülmaschinenfest" bzw. "waschmaschinenfest" - bis zu den entsprechenden Temperaturen - können beinhalten, dass die entsprechenden Materialien laugenstabilisiert sind und/oder bei mindestens 100 oder mindestens 150 Waschzyklen keine signifikante farbliche oder materielle (Sprödheit) Beeinträchtigung erfahren.

Bevorzugt ist eine erfindungsgemässe Ausführungsform, bei welcher die Trommel im Gehäuseunterteil gelagert ist und das Gehäuseoberteil einen elektrischen Trommelantrieb trägt, welcher angeordnet ist, im zusammengesetzten Zustand des Gehäuses die Trommel anzutreiben. Der Trommelantrieb kann dazu ein Übertragungsmittel (bspw. Zahnrad) aufweisen, welches so mit der Trommel zusammenwirkt, dass durch den Trommelantrieb im zusammengesetzten Zustand des Gehäuses die Trommel angetrieben werden kann. Durch Abheben des Gehäuseoberteils wird die Trommel vom Antrieb entkoppelt, ohne dass weitere Massnahmen notwendig wären. Insbesondere kann der Antrieb der Trommel von oben her erfolgen, d.h. die Antriebsmittel sind oberhalb der Trommelachse angeordnet und greifen von oben her in eine entsprechende Struktur (Zahnrad oder dergleichen) der Trommel ein.

Die Trommel kann auf einfache Art drehbar in einer entsprechenden Aufnahme des Gehäuseunterteils gelagert und aus diesem heraushebbar sein. Für die Wartung ergibt sich so ein maximal einfacher Ablauf: Der Benutzer muss lediglich das Gehäuseoberteil abheben (wozu dieses optional Handgriffe, bspw. in der Form von Griffmulden, aufweisen kann) und dann die Trommel herausheben, woraufhin er ggf. nach Entfernung einer Endplatte die Matte abziehen und bei Bedarf reinigen kann. Das Zusammensetzen erfolgt entsprechend mit einem umgekehrten Ablauf.

Der Trommelantrieb kann einen eigenen Elektromotor aufweisen oder optional über geeignete Übertragungsmittel den vom Motor des Ventilators erzeugten Vortrieb nutzen.

Ein vorteilhaftes optionales Merkmal ist dadurch gegeben, dass die Trommel ein Zahnrad aufweist, in welches ein entsprechendes Zahnrad des Trommelantriebs eingreift. Ein Zahnrad der Trommel kann zu einem in der Herstellung ursprünglich separaten Teil gehören. Das ermöglicht bspw. die Herstellung des Zahnrades - und/oder eines Lagerzapfens für die Trommel - aus einem dafür besonders geeigneten Material, bspw. einem Kunststoff, d.h. vorzugsweise ist ein Trommelkörper aus einem ersten Kunststoff gefertigt und ist das Zahnrad aus einem vom ersten Kunststoff verschiedenen zweiten Kunststoff gefertigt.

Gemäss einer alternativen Ausführungsform können alle Strukturen zur Montage der Trommel sowie zu deren Antrieb allein im Gehäuseoberteil angeordnet sein, wobei sich vorteilhafterweise ein direkter und dauerhafter Anschluss des Antriebs an die Trommel ohne Zwischenelemente realisieren lässt.

Vorteilhafterweise kann vorgesehen sein, dass das Gehäuseoberteil eine Luftstromführungshaube bildet oder aufweist, welche im zusammengesetzten Zustand des Gehäuses unmittelbar und vorzugsweise radial an die Aussenseite der Trommel anschliesst und die vom Ventilator geförderte Luft radial zur Trommel führt, eine Durchströmung der Matte bewirkt und verhindert, dass die Luft an der Matte vorbei strömt. Das Gehäuseoberteil - sofern das Gehäuse in der vorstehend beschriebenen Art aufgebaut ist - oder generell das Gerät kann folglich eine Luftstromführung bilden, welche im zusammengesetzten Zustand die durch den Ventilator geförderte Luft kanalisiert und verhindert, dass die Luft anstatt die Matte zu durchströmen an der Matte vorbeiströmt. Die Luftstromführung - sie kann als Luftstromhaube ausgebildet sein - führt daher unmittelbar an die die Trommel umspannende Matte an und endet bspw. in einem Abstand von höchstens wenigen Millimetern, bspw. höchstens 10 mm, höchstens 8 mm oder höchstens 5 mm, bspw. 3-8 mm von dieser.

Für eine solche Luftstromführung kann insbesondere vorteilhaft sein, wenn die Trommel wie vorstehend erwähnt frei von aussenseitig die Matte übergreifenden Elementen ist und die Matte also mindestens in einem auf axiale Richtungen zentralen Bereich entlang des ganzen Umfangs die radial äusserste Oberfläche der sich drehenden Einrichtung bildet. So kann die Luftführung besonders nahe an die äussere Oberfläche der Matte herangeführt sein. Eine solche Luftstromführung kann insbesondere sich zur Matte hin verengend ausgestaltet sein, so dass sich ein Düseneffekt bildet.

Der Ventilator kann insbesondere oberhalb der Trommel angeordnet sein. Der Ventilator kann ein Axiallüfter oder ein Diagonallüfter sein und einen verhältnismässig grossen Durchmesser aufweisen. Er kann vertikal eingebaut sein. Diese Konstellation hat sich als besonders günstig erwiesen, insbesondere wenn die Trommel - was aus Effizienzgründen bevorzugt ist - einen grossen Teil der Grundfläche des ganzen Gerätes einnimmt.

Ganz unabhängig davon ist bevorzugt, dass die Trommel einen grossen Teil der Grundfläche des Geräts einnimmt, bspw. (mit der möglichen Ausnahme eines seitlich angebrachten Wassertanks) mindestens 50% (Fläche der Trommel in einer Projektion entlang der Vertikale).

Die Trommel kann in dem Sinn symmetrisch sein, dass sie sie in zwei verschiedenen Orientierungen mit um 180° relativ zueinander gedrehter Drehachse ins Gehäuseunterteil einlegbar ist. Das erhöht die Bedienfreundlichkeit für den Benutzer, der dann keine Möglichkeit hat, die Trommel falsch einzubauen.

In Ausführungsformen kann ausserdem ein zusätzliches Filterelement vorhanden sein, das so angeordnet ist, dass vom Ventilator angesaugte Luft durch das Filterelement strömt, bevor es zum Ventilator gelangt. Auch das Umgekehrte (Luft wird vom Ventilator durch das Filterelement geblasen) ist denkbar. Durch die erfindungsgemässe Ausgestaltung kann die Fläche des Filterelements relativ gross gewählt werden und ist das Filterelement so auch bei kleinem Strömungswiderstand effizient und wartungsarm (d.h. es muss nur selten ausgewechselt werden).

Anstelle der oben beschriebenen Trommel mit im Wesentlichen horizontal liegender Drehachse könnten auch anders orientiert eingesetzte Trommeln Verwendung finden. Eine solche Ausführungsform fällt jedoch nicht unter den Schutzbereich der Ansprüche. Wenn die auf der Trommel aufgespannte Matte ausreichend Saugfähigkeit aufweist, ist beispielsweise sogar die Verwendung einer Trommel mit vertikaler Drehachse möglich. Das Wasser aus der auch hier untenliegenden Wasserwanne wird durch die Saug- und Kapillarwirkung in der um die Trommel gelegten Matte hochgesaugt, so dass die gesamte Fläche der Matte mit zu verdunstendem Wasser getränkt ist.

Nachfolgend werden Ausführungsbeispiele der Erfindung anhand von Zeichnungen näher beschrieben. In den Zeichnungen bezeichnen gleiche Bezugszeichen gleiche oder analoge Elemente. Die Figuren zeigen teilweise die gezeigten Elemente in unterschiedlichen Massstäben.

Es zeigen:
Figur 1 eine Ansicht eines erfindungsgemässen Luftwäschers;
Figur 2 eine Explosionsdarstellung des Gehäuseunterteils und von darin gelagerten Elementen;
Figur 3 eine Explosionsdarstellung des Gehäuseoberteils und von darin gelagerten Elementen;
Figur 4 den Luftwäscher gemäss Figuren 1-3 entlang der Ebene IV-IV in Fig. 1 geschnitten;
Figur 5 Elemente einer Ausführungsform mit zusätzlichem Filterelement;
Figur 6 eine vergrösserte Wasserwanne zur Aufnahme eines separaten Wassertanks;

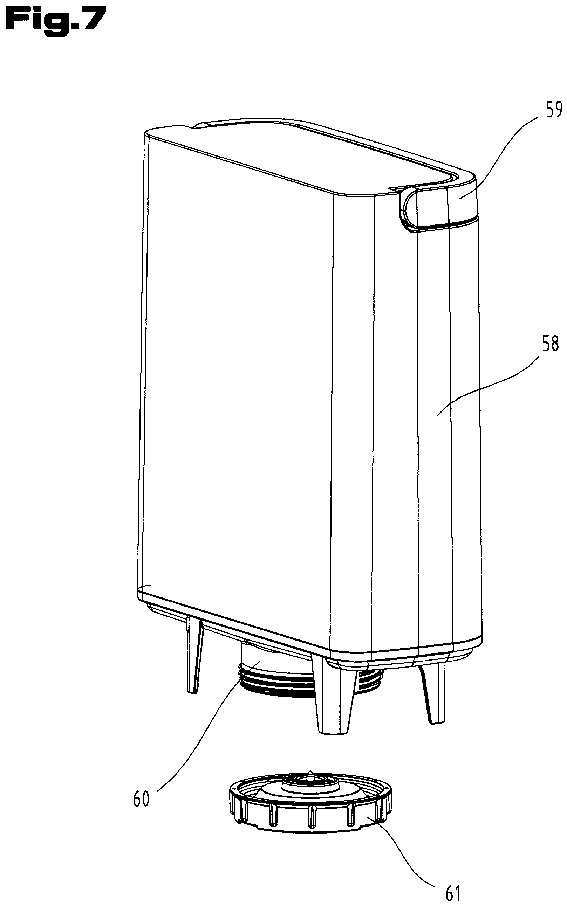

Figur 7 einen Wassertank zur Verwendung mit der Wasserwanne der Figur 6; und
Figur 8 einen Luftwäscher mit vergrösserter Wasserwanne und separatem Wassertank in einem Schnittansicht gemäss Figur 4.

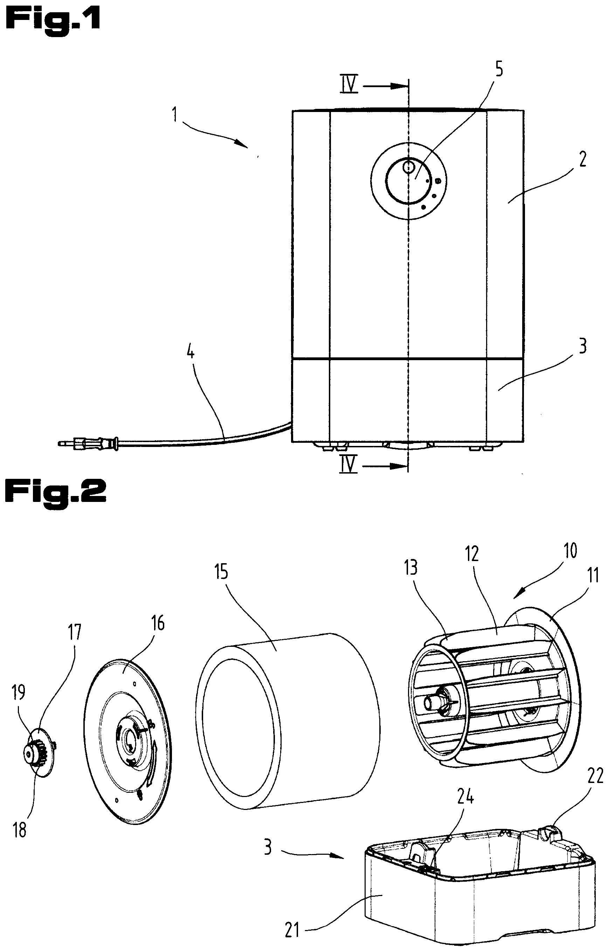

Der in Figur 1 gezeigte Luftwäscher 1 weist ein aus einem Gehäuseoberteil 2 und einem Gehäuseunterteil 3 zusammengesetztes Gehäuse auf. Über ein Stromkabel 4, welches bevorzugt dem Gehäuseunterteil 2 entlang ins Gehäuseoberteil geführt ist, ist er am Stromnetz anschliessbar. Er kann über ein oder mehrere Bedienelemente 5 in Betrieb gesetzt werden. Figur 2 zeigt das Gehäuseunterteil 3 und darin vorhandene Teile in einer Explosionsdarstellung. Das Gehäuseunterteil bildet eine Wanne 20, 21 für zu verdunstendes Wasser. Die Wanne ist nach Abheben des Gehäuseoberteils in einfacher Weise von oben befüllbar, wobei ein Entfernen der Trommel 10 bis 19 dafür nicht unbedingt nötig ist.

Die Wanne 20, 21 ist beispielsweise aus einem geeigneten Kunststoff gefertigt.

An der Wanne 20, 21 ist beidseitig je eine Aufnahme 22 für einen Drehzapfen 19 der Trommel 10 bis 19 angeordnet. Ausserdem sind zwei elektrische Kontakte 24, beispielsweise in Form von Edelstahlbändern vorhanden, die sich von einer in Fig. 2 sichtbaren oberseitigen Kontaktfläche streifenartig an der Wanneninnenseite nach unten erstrecken. Vom Gehäuseoberteil her kann durch eine Messung der Leitfähigkeit zwischen den beiden Kontakten 24 bestimmt werden, ob die Wanne 20, 21 mindestens bis zum unterseitigen Ende der Kontakte 24 mit Wasser gefüllt ist oder nicht.

Die Trommel 10 bis 19 ist durch die Drehzapfen 19 in der Wanne 20, 21 drehbar gelagert, und zwar so, dass die Trommel 10 bis 19 unterseitig den Wannenboden nicht ganz berührt.

Die Trommel weist einen Trommelkörper 10 mit einer ersten Endplatte 11 sowie einer Auflagepartie auf, welche ihrerseits im dargestellten Ausführungsbeispiel durch eine Mehrzahl von axialen Stegen 12 gebildet wird. Der Trommelkörper 10 ist einteilg ausgebildet.

Die offenporige Matte 15 ist aus einem flexiblen, Material auf Textilbasis oder Kunststoffbasis gefertigt.

Sie bildet ein geschlossenes Band. Sie kann beispielsweise gefertigt sein, indem die Endkanten eines einteiligen Bandes passender Länge oder von mehreren Bandteilen - durch strichlierte Linien angedeutet miteinander verschweisst oder durch andere Verfahren (Vernähen oder dergleichen) oder Verbindungsmittel wie Klettverschlüsse, Druckknöpfe oder dgl. aneinander befestigt werden. Entlang einer entsprechenden axial verlaufenden Saumlinie (in Fig. 2 nicht dargestellt) können die Dicke und folglich die Wasseraufnahmefähigkeit der Matte reduziert sein, was die Funktionalität des Geräts insgesamt nicht beeinträchtigt.

Die Matte 15 kann beispielsweise je eine innere und äussere textile Schicht aufweisen, wobei die innere und äussere Schicht durch eine Vielzahl von zwischen diesen verlaufenden Fäden verbunden sind. Das Material der Matte kann ebenfalls ein geeigneter Kunststoff sein, beispielsweise Polyethylenterephthalat (PET).

Die Matte 15 umspannt die hier durch die axialen Stege 12 gebildete Auflagepartie des Trommelkörpers 10. Sie wird innenseitig durch diese und axial beidseitig durch die erste Endplatte 11 und vorzugsweise eine zweite Endplatte 16 begrenzt, während sie radial-aussenseitig die äussere Oberfläche der Einrichtung bildet, d.h. es gibt mindestens in einem (in Bezug auf axiale Richtungen) zentralen Bereich keine Elemente des Trommelkörpers 10, welche die Matte 15 übergreifen, d.h. die Matte ist bspw. nur von innen geführt.

Vorzugsweise sind keinerlei Verbindungselemente zwischen der Matte 15 und den Stegen 12 oder jeglichen anderen Strukturen des Trommelkörpers 10 vorhanden, welche die axiale und allenfalls auch die umfangsmässige Relativbewegung zwischen Matte 15 und deren Auflage begrenzen oder unterbinden könnten. Es sind jedoch Ausführungsformen denkbar, bei welchen die Matte 15 mit dem Trommelkörper 10 derart verbunden ist, dass die Relativbewegungen zumindest begrenzt sind. Die Matte 15 kann dann erst nach radialem Aufweiten und Abheben von der Auflage, durch Lösen von mechanischen Verbindungen oder dergleichen, eventuell auch Kombinationen davon, von der Trommel 10 bis 19 entfernt werden. Schliesslich sind auch Ausführungsformen mit fix an der Trommel 10 bis 19 angebrachter, insbesondere damit verklebter, Matte 15 möglich.

Die zweite Endplatte 16 ist am Trommelkörper befestigbar. Die Befestigung erfolgt hier nach dem Bajonettverschlussprinzip durch ein einfaches Heranführen an den Trommelkörper gefolgt von einer verriegelnden Drehbewegung. Die Matte 15 hat in axialer Richtung ein leichtes Übermass, d.h. sie wird im montierten Zustand zwischen den Endplatten 11, 16 leicht komprimiert.

Die zweite Endplatte 16 weist einen hier als separates Element 17 gefertigten Lager- und Übertragungsabschnitt auf, welche den erwähnten Drehzapfen 19 sowie ein Zahnrad 18 bildet, welches dem Antrieb der Trommel 10 bis 19 dient.

Die Lager- und Übertragungspartie kann insbesondere deshalb als separates Element 17 vorhanden und an der zweiten Endplatte 16 befestigt sein, weil sie optional aus einem anderem Material gefertigt sein kann, beispielsweise aus einem aufgrund der Gleitreibungseigenschaften für Zahnräder besonders geeigneten Gleitkunststoff.

Der ersten Endplatte 11 kann ebenfalls nebst einem Drehzapfen optional ein Zahnrad zugeordnet sein, insbesondere ein mit dem Zahnrad 18 des erwähnten separaten Elementes 17 identisches Zahnrad. Insbesondere kann die Trommel 10 bis 19 im zusammengesetzten Zustand symmetrisch bezüglich eines umgekehrten Einsetzens, d.h. einer Drehung seiner Achse um 180° sein.

Die axialen Stege 12 weisen zur Seite der zweiten Endplatte 16 hin eine sich verjüngende Partie 13 auf. Das erleichtert das Aufschieben der Matte auf die von der Trommel 10 bis 19 gebildete Auflage. Beim Aufschieben kann insbesondere die Matte 15 leicht entgegen ihrer Elastizität in Umfangrichtung gedehnt werden.

Die Trommel 10 bis 19 und die Wanne 20, 21 sind insbesondere spülmaschinenfest. Die Matte 15 ist in der Waschmaschine waschbar. Es hat sich gezeigt, dass aufgrund der Flexibilität des Materials der Matte 15 ein Waschen in der Waschmaschine auch sehr effizient entkalkt.

Durch das Verformen während des Waschvorganges fallen Kalkfragmente ganz einfach von der Matte 15 ab.

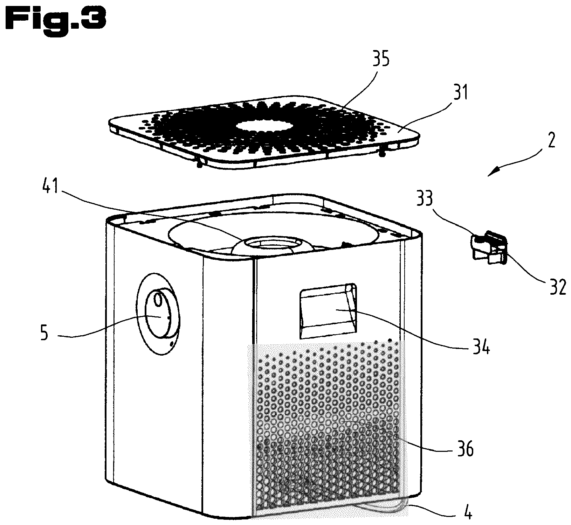

Figur 3 zeigt das Gehäuseoberteil 2 mit Abdeckung 31 und einschiebbarem separatem Aromafach 32. Am oberen Gehäuseteil ist beidseitig je ein Handgriff 34 angeformt. Die Handgriffe ermöglichen ein einfaches Abheben des Gehäuseoberteils 2 vom Gehäuseunterteil 3.

Das Aromafach 32 ist als herausziehbare Schublade abgebildet, in welche bei Bedarf ein Duftstoff getröpfelt werden kann. In der Schublade kann optional ein textiles Aufnahmeelement vorhanden sein, welches den Duftstoff aufsaugt und kontrolliert wieder abgibt. An der Schublade vorbei kann eine durchströmbare Verbindung zum eigentlichen durchströmten Bereich vorhanden sein, so dass über den Bernoulli-Effekt Luft an der Schublade vorbei angesaugt wird, so dass die vom Gerät abgegebene befeuchtete und gewaschene Luft aromatisiert ist.

Der Strömungsweg der vom Ventilator 41 geförderten Luft durch den Luftwäscher 1 hindurch führt durch entsprechende erste Öffnungen 35 in der Abdeckung am Ventilator 41 vorbei von oben ins Innere der Trommel, von dort wieder seitlich durch zweite Öffnungen 36 aus dem Gehäuse hinaus - oder umgekehrt.

Das Aromafach 32 kann optional einen Werkzeugfortsatz 33 aufweisen, welcher in eine der ersten Öffnungen 35, die dafür vorgesehen ist, einführbar ist und mit welchem die Abdeckung ohne die Verwendung separater Werkzeuge vom Gehäuseoberteil 2 entfernbar ist.

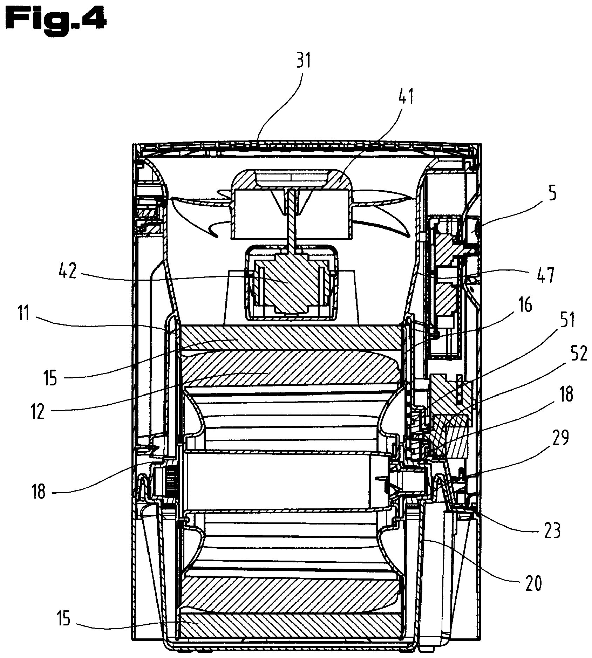

In der Schnittdarstellung von Figur 4 sieht man, dass die vom Ventilator 41 - einem Axiallüfter - geführte Luft von einer Luftstromführungshaube 47 geführt wird. Diese ist im dargestellten Ausführungsbeispiel so ausgebildet, dass sie sich nach unten, zur Trommel 10 bis 19 hin, verengt, so dass sich ein gewisser Düseneffekt ausbildet. Die Luftstromführungshaube 47 erstreckt sich bis unmittelbar zu einem oberen Rand der Trommel hin und endet in einem sehr kleinen Abstand von bspw. 3-8 mm von der Oberfläche der Matte.

Der Antrieb der Trommel 10 bis 19 könnte gemäss einer Option über entsprechende Übertragungs- und Untersetzungsmittel vom Lüfter-Elektromotor 42 her erfolgen. Im dargestellten Ausführungsbeispiel ist im Gegensatz dazu ein eigener Trommelantriebsmotor 52 vorhanden, welcher über ein Antriebszahnrad 51, welches mit dem Zahnrad 18 in Eingriff bringbar ist, die Trommel 10 bis 19 antreibt. Allenfalls nötige Untersetzungsmittel können im Gehäuse des Trommelantriebsmotors 52 vorhanden sein.

Anstelle eines Antriebszahnrads besteht auch die Möglichkeit, die Trommel 10 bis 19 über einen Schnecken- oder Reibradantrieb anzutreiben. Als Alternative zu einer einzelnen Trommel mit darauf aufgespannter Matte ist auch eine über mehrere separate Rollen geführte bandförmige Matte denkbar. Ein Abschnitt dieses Bandes würde dabei durch die Wasserwanne 20, 21 geführt sein, während sich zumindest ein weiterer Abschnitt des Bandes im Luftstrom des Ventilators befindet.

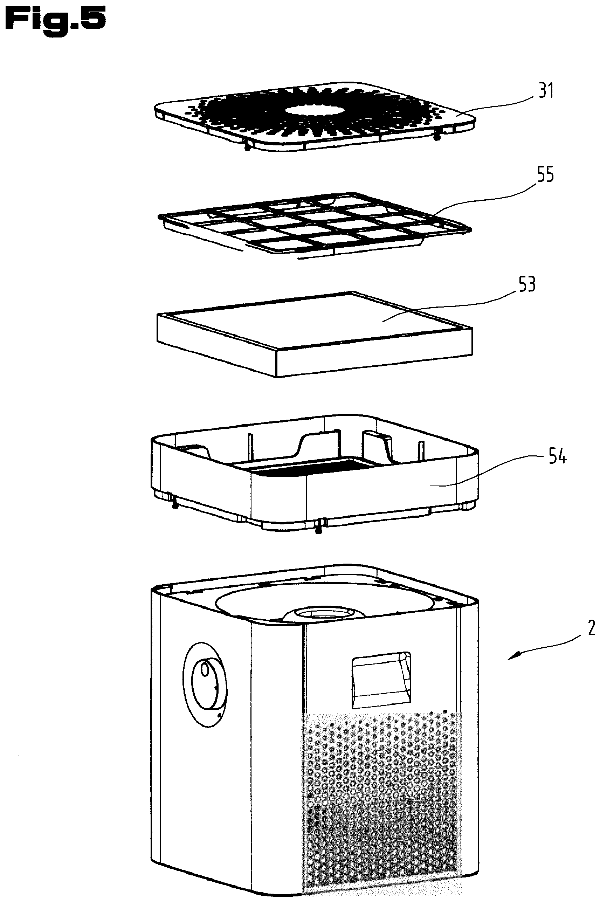

Figur 5 zeigt eine Ausführungsform, bei welcher das Gehäuseoberteil zusätzlich zu den vorstehend beschriebenen Elementen eine Filtermatte 53 trägt. Die Filtermatte 53 kann als einfaches Fuselsieb oder auch als HEPA (High Efficiency Particulate Airfilter) -Feinstaubfilter ausgebildet sein; auch Kombinationen aus einem Grobfilter und einem HEPA-Filter sind möglich. Bspw. kann ein HEPA-Filter mit einem plissierten Gewebe, bspw. aus PE, verwendet werden, welches sich durch eine grosse Fläche und daher einen im Verhältnis zur Effizienz geringen Druckabfall auszeichnet. In einer Ausführungsform ist ein Grobfilter einem Filter einer höheren Filterklasse (F bis H) vorgeschaltet; hierin wird auf die gültigen europäischen Normen (Stand 2014) Bezug genommen. HEPA-Filter dienen der Ausfilterung von lungengängigen Stäuben, Pollen, Rauchpartikeln, Bakterien, etc. aus der Luft.

Ergänzend oder alternativ kann auch ein Filterelement aus Aktivkohle, zur Bekämpfung von unangenehmen Gerüchen oder dergleichen, vorhanden sein. Beispielsweise kann die Filtermatte 53 ein hybrides Gebilde aus Feinstaubfilter und Aktivkohle sein.

Die Filtermatte 53 wird hier in einem Filtermattenträger 54 gelagert. Oberhalb befindet sich entfernbares Grob-Vorfilter 55. Der Filtermattenträger 54 ist auf das Gehäuseoberteil 2 aufsetzbar und an diesem befestigbar. Die Abdeckung 31 wird dann oberseitig am Filtermattenträger 54 befestigt.

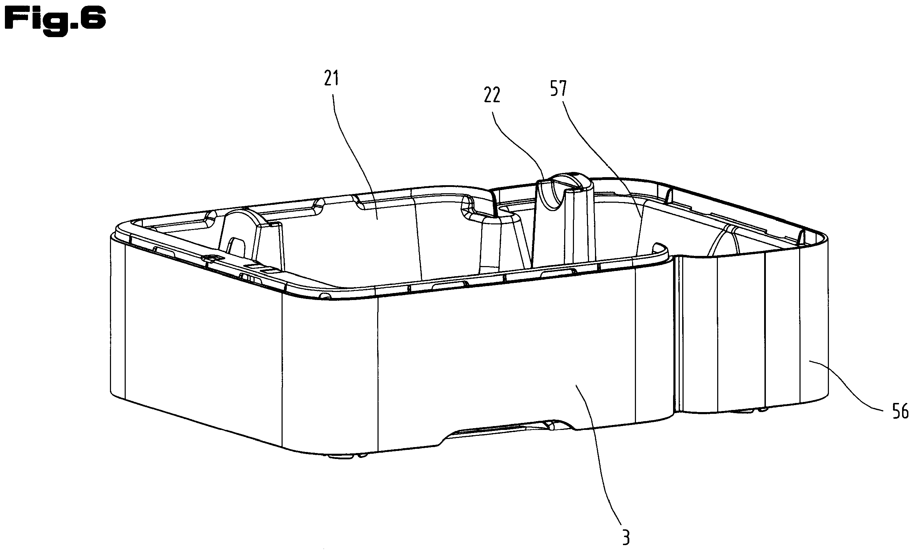

In einer weiteren alternativen Ausführungsform kann ergänzend oder alternativ zu einer Filtermatte 53 ein Wassertank vorhanden sein, um die Betriebsdauer zwischen den notwendigen Befüllungsvorgängen zu verlängern. Die Figur 6 zeigt ein im Vergleich mit der Ausführungsform der Fig 2 vergrössertes Gehäuseunterteil 3 und darin vorhandene Strukturen, wobei bevorzugt auch eine grössere Wasserwanne 20, 21 für das zu verdunstende Wasser vorhanden ist als bei der Ausführungsform der Fig. 2. Im Gegensatz zur Ausführungsform der Fig. 2 ist das Gehäuseunterteil 3 der Figur 6 zumindest in der Länge und/oder der Breite grösser ausgeführt und überragt mit seinem Abschnitt 56 den Teil, welcher das Gehäuseoberteil 2 (hier nicht dargestellt) trägt und nach oben hin von diesem abgedeckt ist. Auch die Wanne 20, 21 ist bevorzugt mit einem zusätzlichen Abschnitt 57 in den Abschnitt 56 des Gehäuseunterteils 3 hinein verlängert und/oder verbreitert.

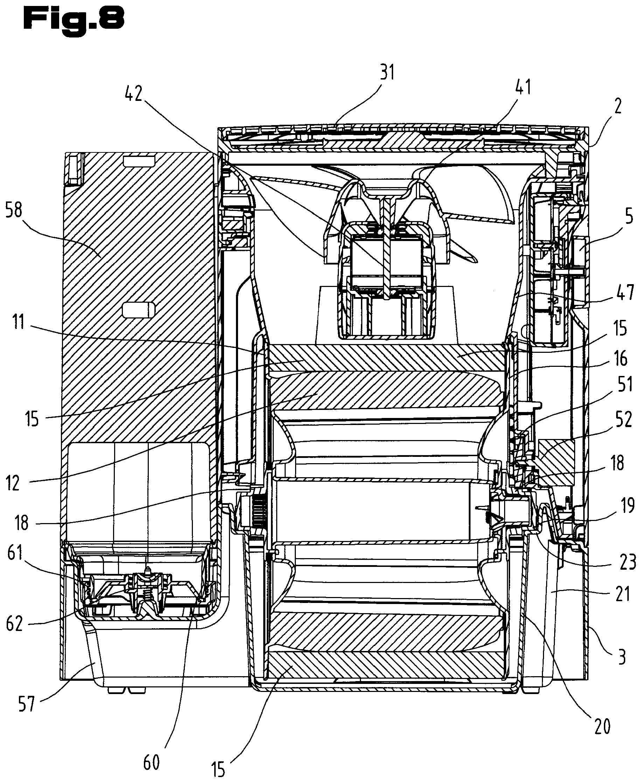

Der Abschnitt 56 trägt einen bevorzugt separaten und vorteilhafterweise abnehmbaren Wassertank 58, der in Fig. 8 dargestellt ist. Der Wassertank 58 weist dazu beispielsweise vier Standbeine oder ähnliche Strukturen auf, mit welchen er vorzugsweise in der Wasserwanne 20, 21, 57 abgestellt werden kann. Der Wassertank 58 kann dabei den Abschnitt 56 zur Gänze aber auch nur teilweise abdecken. Er weist zur leichteren Handhabung vorteilhafterweise einen wegklappbaren, oder abnehmbaren Handgriff 59 auf. Der Wassertank 58 kann wie dargestellt bspw. seitlich am Gehäuse 2, 3 befestigt sein und einen unterseitigen Ausgang 60 aufweisen, welcher in die Wasserwanne führt und der gleichzeitig auch als Befüllungsöffnung genutzt werden kann. Der Wassertank 58 kann sich allenfalls auch über zwei oder mehrere Seiten des Gehäuses 2, 3 erstrecken und ist in diesen Fällen von oben gesehen im Wesentlichen L-förmig, U-förmig oder gar ringförmig gestaltet.

Im Verschluss 61 des Ausgangs bzw. der Befüllungsöffnung 60, der bevorzugt an einer Position liegt, die im auf das Gehäuseunterteil 3 aufgesetzten Stellung des Wassertanks 58 im Volumen der Wasserwanne, insbesondere deren verlängertem Abschnitt 57, liegt, kann vorteilhafterweise gleich ein geeigneter Mechanismus eingebaut sein, der bewirkt, dass sich der Ausgang zur Wasserwanne 20, 21, 57 hin automatisch verschliesst, wenn der Wassertank 58 weggehoben wird und dass Wasser nur in die Wasserwanne 20, 21, 57 nachfliesst, wenn der Wasserstand in der Wasserwanne 20, 21, 57 unter ein bestimmtes Niveau fällt. Der Vorgang des Nachfliessens des Wassers kann dabei aktiv - beispielsweise über ein steuerbares Ventil, vorzugsweise im Verschluss 61 positioniert - geregelt oder passiv bewirkt werden, wie dies etwa von Selbsttränkern für Haustiere bekannt ist.

Beispielsweise kann im Verschluss 61 ein Ventil 62 eingebaut sein, welches ein Nachfliessen von Wasser aus dem Wassertank 58 in die Wasserwanne 20, 21, 57 nur bei Unterschreiten einer Mindestfüllstandshöhe in der Wasserwanne 20, 21, 57 gestattet und ein Ausfliessen des Wassers bei Abheben des Wassertanks 58 vom Gehäuseunterteil 3, 56 verhindert. Selbstverständlich können die Funktionen des Verschliessens und des Regelns der Wasserzufuhr auch in getrennten Bauteilen oder Baugruppen realisiert sein, welche durch eine starre oder flexible Leitung verbunden sind.

Ergänzend kann eine Pumpe vorhanden sein, mit welcher Pumpe das Wasser aus der Wasserwanne 20, 21, 57 aktiv in den Wassertank 58 umgepumpt werden kann. Bevorzugt ist diese Pumpe dann nahe dem Verschluss 61 bzw. direkt im Verschluss 61 positioniert, wobei in letzterem Fall die Energieversorgung und Ansteuerung der Pumpe über Metallkontakte im Kontaktbereich zwischen Verschluss 61 und Wassertank 58, beispielsweise im Bereich einer allfälligen Schraubverbindung, bewerkstelligt werden kann.

Auch bei nicht über den Gehäuseoberteil 2 vergrössertem Gehäuseunterteil 3 bzw. bei nicht über den Gehäuseoberteil 2 hinaus vergrösserter Wasserwanne 20, 21 können die Nachfüllintervalle für das zu verdunstende Wasser durch einen Wassertank 58 verlängert werden. Dazu ist neben einem immer möglichen Anschluss eines externen Wassertanks 58 über flexible oder starre Leitungen, die eine fluiddichte Leitungsverbindung zwischen Wassertank 58 und Wasserwanne 20, 21 herstellen, auch die direkte Ankopplung eines Wassertanks 58 unmittelbar am Gehäuse 2, 3, insbesondere dem Gehäuseunterteil 3 von Vorteil.

Bevorzugt ist dabei in einer Seitenwand des Gehäuseunterteils 3 ein erstes Verbindungsstück 63 eingebaut, welches eine Verbindung zur Wasserwanne 20, 21 im Gehäuseunterteil 3 herstellt. In einem seitlich an das Gehäuse 2, 3 anschliessbaren Wassertank 58 ist an einer Seite ein komplementäres Verbindungsstück 64 in einer dem ersten Verbindungsstück 63 entsprechenden Höhe eingebaut, wobei die beiden Verbindungsstücke 63, 64 zur Herstellung einer fluiddichten Verbindung zwischen Wassertank 58 und Wasserwanne 20, 21 ausgestaltet sind. Bevorzugt sind die Verbindungsstücke 63, 64 gegeneinander verriegelbar, beispielsweise mittels eines Bajonettverschlusses, mittel Sicherungsklammern, Schraubverbindungen, etc. Alternativ oder ergänzend dazu können entsprechende Verbindungs- und Verriegelungsanordnungen zur Herstellung einer lösbaren Verbindung zwischen dem Wassertank 58 und dem Gehäuse 2, 3 an diesen Bauteilen angebracht sein.

## Patentansprüche

1. Luftwäscher (1), aufweisend ein Gehäuse (2, 3), einen elektrisch angetriebenen Ventilator (41), eine Wasserwanne (20, 21, 57) und eine im Wesentlichen horizontal liegende Trommel (10 bis 19) mit einem offenporigen bzw. saugfähigen Gebilde, welche elektrisch angetrieben um eine Drehachse drehbar ist, wobei der jeweils unterste Abschnitt der Trommel (10 bis 19) unterhalb einer definierten Mindestfüllstandshöhe der Wasserwanne (20, 21, 57) gelegen ist, wobei an der Trommel (10 bis 19) eine vorzugsweise um die Drehachse zylindrische Auflage aus einem oder mehreren Auflageelementen (12) ausgebildet ist und das offenporige bzw. saugfähige Gebilde als eine ein geschlossenes umlaufendes Band bildende benetzbare Matte (15) ausgebildet ist, welche Matte (15) die Auflage an deren Aussenseite umspannt und durch Abziehen in axialer Richtung von der Trommel (10 bis 19) entfernbar und durch eine Bewegung in axialer Richtung auf die Trommel aufschiebbar ist, wobei die Luftführung für die durch den Ventilator (41) geförderte Luft durch zumindest einen oberhalb der Wasserwanne (20, 21, 57) gelegenen oberen Abschnitt der Matte (15) und der mit der Matte umspannten Trommel (10 bis 19) verläuft, wobei die Trommel einen Trommelkörper (10) mit zumindest einer ersten Endplatte (11) mit Auflageelementen (12) und mit einer zweiten Endplatte (16) aufweist, wobei die Auflageelemente (12) durchgehend von der ersten Endplatte (11) bis zur zweiten Endplatte (16) verlaufen, und die erste Endplatte (11) und die zweite Endplatte (16) die Matte (15) axial beidseitig begrenzen, **dadurch gekennzeichnet, dass**
die erste Endplatte einteilig mit den Auflageelementen ausgeführt ist, und dass die zweite Endplatte (16) zum Entfernen der Matte (15) reversibel vom Trommelkörper (10) entfernbar ist, vorzugsweise werkzeugfrei manuell vom Trommelkörper (10) entfernbar ist.

2. Luftwäscher nach Anspruch 1, **dadurch gekennzeichnet, dass** die zweite Endplatte (16) mittels eines Bajonettverschlusses mit dem Trommelkörper (10) lösbar verbunden ist.

3. Luftwäscher nach Anspruch 1 oder 2, **dadurch gekennzeichnet, dass** die Auflage durch ein korbartiges Gitter oder Geflecht mit Durchbrüchen oder eine Anordnung von axial verlaufenden Stegen (12) gebildet ist.

4. Luftwäscher nach einem der Ansprüche 1 bis 3, **dadurch gekennzeichnet, dass** die Trommel und der Ventilator (41) relativ zueinander derart angeordnet und/oder ausgerichtet sind und/oder dass die Luft im Gehäuse (2, 3) derart geführt ist, dass die Luft zuerst durch die Matte (15) hindurch radial ins Trommelinnere und von dort erneut durch die Matte (15) hindurch radial wieder nach aussen strömt.

5. Luftwäscher nach einem der Ansprüche 1 bis 4, **dadurch gekennzeichnet, dass** das Gehäuse (2, 3) ein Gehäuseunterteil (3), in welchem die Wasserwanne (20, 21, 57) ausgebildet oder angeordnet ist, und welches frei von elektronischen Bauteilen ist, und ein vom Gehäuseunterteil (3) abhebbares Gehäuseoberteil (2) aufweist, wobei das Gehäuseoberteil (2) den Ventilator (41) trägt.

6. Luftwäscher nach einem der Ansprüche 1 bis 5, **dadurch gekennzeichnet, dass** ein Wassertank (58) mit dem Gehäuse (2, 3) zumindest temporär verbindbar ist, bevorzugt mit dem Gehäuseunterteil (3) und dessen Wasserwanne (20, 21, 57).

7. Luftwäscher nach Anspruch 6, **dadurch gekennzeichnet, dass** das Gehäuseunterteil (3) eine grössere Länge und/oder Breite aufweist als das Gehäuseoberteil (2), wobei sich die Wasserwanne (20, 21, 57) bis in den nicht vom Gehäuseoberteil (2) abgedeckten Bereich des Gehäuseunterteils (3) erstreckt und als Träger eines abnehmbaren Wassertanks (58) ausbildet ist.

8. Luftwäscher nach Anspruch 7, **dadurch gekennzeichnet, dass** an einer im auf das Gehäuseunterteil (3) aufgesetzten Stellung des Wassertanks (58) im Volumen der Wasserwanne (20, 21, 57) liegenden Position eine abschliessbare Befüllungsöffnung (60) und/oder ein Ventil (62) angeordnet sind, welches Ventil (62) das Nachfliessen von Wasser aus dem Wassertank (58) in die Wasserwanne (20, 21, 57) nur bei Unterschreiten einer Mindestfüllstandshöhe in der Wasserwanne (20, 21, 57) erlaubt und bei Abheben des Wassertanks (58) vom Gehäuseunterteil (3) verhindert, wobei vorzugsweise beide Funktionen in einem Bauteil vereint sind.

9. Luftwäscher nach einem der Ansprüche 1 bis 8, **dadurch gekennzeichnet, dass** zumindest ein Füllstandssensor für das Wasser in der Wanne (20, 21, 57) vorhanden ist, wobei vorzugsweise das Gehäuseunterteil (3) elektrische Kontakte aufweist, welche mit einer im Gehäuseoberteil (2) angeordneten Auswerteelektronik für eine Leitfähigkeitsmessung verbunden sind.

10. Luftwäscher nach einem der Ansprüche 1 bis 9, **dadurch gekennzeichnet, dass** die Trommel (10 bis 19) im Gehäuseunterteil (3) gelagert ist und das Gehäuseoberteil (2) einen elektrischen Trommelantrieb (51) trägt, welcher angeordnet ist, im zusammengesetzten Zustand des Gehäuses (2, 3) die Trommel anzutreiben.

11. Luftwäscher nach Anspruch 10, **dadurch gekennzeichnet, dass** die Trommel (10 bis 19) ein Zahnrad (18) aufweist, in welches ein entsprechendes Zahnrad (52) des Trommelantriebs (51) eingreift, wobei vorzugsweise ein Trommelkörper aus einem ersten Kunststoff gefertigt ist und das Zahnrad (18) aus einem vom ersten Kunststoff verschiedenen zweiten Kunststoff gefertigt ist.

12. Luftwäscher nach einem der Ansprüche 1 bis 11, **dadurch gekennzeichnet, dass** das Gehäuseoberteil (2) eine Luftstromführungshaube (47) bildet oder aufweist, welche im zusammengesetzten Zustand des Gehäuses (2, 3) unmittelbar und vorzugsweise radial an die Aussenseite der Trommel (10 bis 19) anschliesst und die vom Ventilator geförderte Luft radial zur Trommel (10 bis 19) führt, eine Durchströmung der Matte (15) bewirkt und verhindert, dass die Luft an der Matte vorbei strömt.

13. Luftwäscher nach einem der Ansprüche 1 bis 12, **dadurch gekennzeichnet, dass** der Ventilator (41) ein Axiallüfter oder ein Diagonallüfter ist.

14. Luftwäscher nach einem der Ansprüche 1 bis 13, **dadurch gekennzeichnet, dass** die Trommel (10 bis 19) derart symmetrisch ausgebildet ist, dass sie in zwei verschiedenen Orientierungen mit um 180° relativ zueinander gedrehter Drehachse einbaubar ist.

15. Luftwäscher nach einem der Ansprüche 1 bis 14, **dadurch gekennzeichnet, dass** die Matte (15) eine innere und eine äussere textile Schicht aufweist, und wobei die innere und die äussere textile Schicht durch eine Vielzahl von Fäden miteinander verbunden sind.

## Claims

1. An air washer (1), comprising a housing (2, 3), an electrically driven fan (41), a water trough (20, 21, 57) and a substantially horizontally lying drum (10 to 19) with an open-pored and/or absorbent structure, which drum (10 to 19) is rotatable about an axis of rotation in an electrically driven manner, wherein the respective lowermost section of the drum (10 to 19) is located below a defined minimum filling level of the water trough (20, 21, 57), wherein a support, preferably cylindrical about the axis of rotation, is formed on the drum (10 to 19) from one or more support elements (12), and the open-pored and/or absorbent structure is formed as a wettable mat (15) forming a closed circumferential band, which mat (15) spans the support on its outside and can be removed from the drum (10 to 19) by pulling it off in the axial direction and can be pushed onto the drum by a movement in the axial direction, wherein the air flow guidance for the air conveyed by the fan (41) passes through at least an upper portion of the mat (15) located above the water trough (20, 21, 57) and the drum (10 to 19) spanned by the mat, wherein the drum has a drum body (10) with at least one first end plate (11) with support elements (12) and with a second end plate (16), wherein the support elements (12) run continuously from the first end plate (11) to the second end plate (16), and the first end plate (11) and the second end plate (16) bound the mat (15) axially on both sides, **characterized in that** the first end plate is made in one piece with the support elements, and that the second end plate (16) can be reversibly removed from the drum body (10) for removing the mat (15), preferably can be removed manually from the drum body (10) without tools.

2. The air washer according to claim 1, **characterized in that** the second end plate (16) is detachably connected to the drum body (10) by means of a bayonet lock.

3. The air scrubber according to claim 1 or 2, **characterized in that** the support is formed by a basket-like grid or mesh with apertures or an arrangement of axially extending webs (12).

4. The air washer according to one of the claims 1 to 3, **characterized in that** the drum and the fan (41) are arranged and/or aligned relative to each other in such a way and/or that the air is guided in the housing (2, 3) in such a way that the air first flows radially through the mat (15) into the interior of the drum and from there again flows radially through the mat (15) back to the outside.

5. The air washer according to one of the claims 1 to 4, **characterized in that** the housing (2, 3) comprises a lower housing part (3), in which the water trough (20, 21, 57) is formed or arranged and which is free of electronic components, and an upper housing part (2) which can be lifted off the lower housing part (3), wherein the upper housing part (2) carries the fan (41).

6. The air washer according to one of claims 1 to 5, **characterized in that** a water tank (58) is at least temporarily connectable to the housing (2, 3), preferably to the lower housing part (3) and its water trough (20, 21, 57).

7. The air washer according to claim 6, **characterized in that** the lower housing part (3) has a greater length and/or width than the upper housing part (2), wherein the water trough (20, 21, 57) extends into the region of the lower housing part (3) not covered by the upper housing part (2) and is formed as a carrier of a removable water tank (58).

8. The air washer according to claim 7, **characterized in that** a closable filling opening (60) and/or a valve (62) are arranged at a position of the water tank (58) located in the volume of the water trough (20, 21, 57) when the water tank (58) is placed on the lower housing part (3), which valve (62) permits the subsequent flow of water from the water tank (58) into the water trough (20, 21, 57) only when the water level in the water trough (20, 21, 57) falls below a minimum level and prevents it when the water tank (58) is lifted off the lower housing part (3), wherein both functions are preferably combined in one component.

9. The air washer according to one of the claims 1 to 8, **characterized in that** at least one level sensor for the water in the tank (20, 21, 57) is present, wherein the lower housing part (3) preferably has electrical contacts which are connected to evaluation electronics arranged in the upper housing part (2) for a conductivity measurement.

10. The air washer according to one of claims 1 to 9, **characterized in that** the drum (10 to 19) is mounted in the lower housing part (3) and the upper housing part (2) carries an electric drum drive (51) which is arranged to drive the drum in the assembled state of the housing (2, 3).

11. The air washer according to claim 10, **characterized in that** the drum (10 to 19) comprises a gear (18) in which a corresponding gear (52) of the drum drive (51) engages, wherein preferably a drum body is made of a first plastic material and the gear (18) is made of a second plastic material different from the first plastic material.

12. The air washer according to one of claims 1 to 11, **characterized in that** the upper housing part (2) forms or comprises an air flow guidance hood (47) which, in the assembled state of the housing (2, 3), directly and preferably radially adjoins the outside of the drum (10 to 19) and guides the air conveyed by the fan radially to the drum (10 to 19), causes a flow through the mat (15) and prevents the air from flowing past the mat.

13. The air washer according to one of claims 1 to 12, **characterized in that** the fan (41) is an axial fan or a diagonal fan.

14. The air washer according to one of claims 1 to 13, **characterized in that** the drum (10 to 19) is configured to be symmetrical such that it can be installed in two different orientations with the axis of rotation rotated by 180° relative to each other.

15. The air washer according to one of claims 1 to 14, **characterized in that** the mat (15) comprises an inner and an outer textile layer, and wherein the inner and the outer textile layers are connected to each other by a plurality of threads.

## Revendications

1. Laveur d'air (1) comprenant un boîtier (2, 3), un ventilateur électrique (41), un bac à eau (20, 21, 57) et un tambour (10 à 19) couché globalement horizontalement, avec une structure poreuse ou absorbante, qui peut tourner avec un entraînement électrique autour d'un axe de rotation, dans lequel la portion la plus basse du tambour (10 à 19) est située en dessous d'une hauteur de niveau de remplissage minimale définie du bac à eau (20, 21, 57), dans lequel, sur le tambour (10 à 19), est prévu un appui cylindrique autour de l'axe de rotation, constitué d'un ou plusieurs éléments d'appui (12) et la structure poreuse ou absorbante est conçue comme un tapis mouillable (15) formant une bande périphérique fermée, ce tapis (15) entourant l'appui au niveau de son côté extérieur et pouvant être retiré du tambour (10 à 19) par une traction dans la direction axiale et pouvant être enfilé sur le tambour par un déplacement dans la direction axiale, dans lequel le guidage de l'air transporté par le ventilateur (41) s'étend à travers au moins une portion supérieure du tapis (15), située au-dessus du bac à eau (20, 21, 57) et le tambour (10 à 19) entouré par le tapi, dans lequel le tambour comprend un corps de tambour (10) avec au moins une première plaque d'extrémité (11) avec des éléments d'appui (12) et une deuxième plaque d'extrémité (16), dans lequel les éléments d'appui (12) s'étendent de manière continue de la première plaque d'extrémité (11) jusqu'à la deuxième plaque d'extrémité (16) et la première plaque d'extrémité (11) et la deuxième plaque d'extrémité (16) délimitent le tapis (15) axialement des deux côtés,
**caractérisé en ce que**
la première plaque d'extrémité est réalisée d'une seule pièce avec les éléments d'appui et **en ce que** la deuxième plaque d'extrémité (16) peut être retirée pour le retrait réversible du tapis (15) du corps de tambour (10), de préférence elle peut être retirée manuellement sans outils du corps de tambour (10).

2. Laveur d'air selon la revendication 1, **caractérisé en ce que** la deuxième plaque d'extrémité (16) est relié de manière amovible avec le corps de tambour (10) au moyen d'un raccordement à baïonnette.

3. Laveur d'air selon la revendication 1 ou 2, **caractérisé en ce que** l'appui est constitué d'une grille ou d'un treillis en forme de corbeille avec des percées ou une disposition de nervures à extension axiale (12).

4. Laveur d'air selon l'une des revendications 1 à 3, **caractérisé en ce que** le tambour et le ventilateur (41) sont disposés et/ou orientés l'un par rapport à l'autre de sorte que l'air est guidé dans le boîtier (2, 3) de façon à ce que l'air entre d'abord à travers le tapis (15) radialement à l'intérieur du tambour puis en ressort radialement, à nouveau à travers le tapis (15).

5. Laveur d'air selon l'une des revendications 1 à 4, **caractérisé en ce que** le boîtier (2, 3) comprend une partie inférieure de boîtier (3), dans laquelle le bac à eau (20, 21, 57) est réalisé ou disposé, et qui est exempte de composants électroniques, et une partie supérieure de boîtier (2) pour être séparée de la partie inférieure du boîtier (3), dans lequel la partie supérieure du boîtier (2) supporte le ventilateur (41).

6. Laveur d'air selon l'une des revendications 1 à 5, **caractérisé en ce qu'**un réservoir d'eau (58) est relié au moins temporairement avec le boîtier (2, 3), de préférence avec la partie inférieure du boîtier (3) et son bac à eau (20, 21, 57).

7. Laveur d'air selon la revendication 6, **caractérisé en ce que** la partie inférieure du boîtier (3) présente une longueur et/ou une largeur supérieure à la partie supérieure du boîtier (2), dans lequel le bac à eau (20, 21, 57) s'étend jusque dans la zone de la partie inférieure du boîtier (3) non recouverte par la partie supérieure du boîtier (2) et est conçu comme le support d'un réservoir d'eau amovible (58).

8. Laveur d'air selon la revendication 7, **caractérisé en ce que**, dans une position se trouvant, dans une position du réservoir d'eau (58) posée sur la partie inférieure du boîtier (3), dans le volume du bac à eau (20, 21, 57), sont disposés une ouverture de remplissage fermable (60) et/ou une soupape (62), cette soupape (62) permettant l'écoulement de l'eau hors du réservoir d'eau (58) vers le bac à eau (20, 21, 57) uniquement lors du passage en dessous d'une hauteur de niveau de remplissage minimal dans le bac à eau (20, 21, 57) et empêchant cela lors du retrait du réservoir d'eau (58) de la partie inférieure du boîtier (3), dans lequel, de préférence, les deux fonctions sont réunies dans un composant.

9. Laveur d'air selon l'une des revendications 1 à 8, **caractérisé en ce qu'**au moins un capteur de niveau de remplissage pour l'eau est prévu dans le bac (20, 21, 57), dans lequel, de préférence, la partie inférieure du boîtier (3) comprend des contacts électriques qui sont reliés avec une électronique d'analyse disposée dans la partie supérieure du boîtier (2) pour une mesure de conductivité.

10. Laveur d'air selon l'une des revendications 1 à 9, **caractérisé en ce que** le tambour (10 à 19) est logé dans la partie inférieure du boîtier (3) et la partie supérieure du boîtier (2) supporte un entraînement de tambour électrique (51) qui est conçu pour entraîner le tambour lorsque le boîtier (2, 3) est assemblé.

11. Laveur d'air selon la revendication 7, **caractérisé en ce que** le tambour (10 à 19) comprend une roue dentée (18) avec laquelle s'engrène une roue dentée (52) de l'entraînement de tambour (51), dans lequel, de préférence, un corps de tambour est constitué d'une première matière plastique et la roue dentée (18) est constituée d'une deuxième matière plastique différente de la première matière plastique.

12. Laveur d'air selon l'une des revendications 1 à 11, **caractérisé en ce que** la partie supérieure du boîtier (2) forme ou comprend un capot de guidage de flux d'air (47) qui se raccorde, lorsque le boîtier (2, 3) est assemblé, directement et, de préférence, radialement, au côté extérieur du tambour (10 à 19) et qui guide l'air transporté par le ventilateur radialement vers le tambour (10 à 19), provoque son écoulement à travers le tapis (15) et empêche que l'air passe à côté du tapis.

13. Laveur d'air selon l'une des revendications 1 à 12, **caractérisé en ce que** le ventilateur (41) est un ventilateur axial ou un ventilateur diagonal.

14. Laveur d'air selon l'une des revendications 1 à 13, **caractérisé en ce que** le tambour (10 à 19) est réalisé de manière symétrique de sorte qu'il peut être monté dans deux orientations différentes avec des axes de rotations décalés de 180° entre eux.

15. Laveur d'air selon l'une des revendications 1 à 14, **caractérisé en ce que** le tapis (15) comprend des couches textiles interne et externe et dans lequel les couches textiles interne et externe sont reliées entre elles par une pluralité de fils.
